# EUROPEAN PATENT SPECIFICATION

(11) **EP 3 997 988 B1**
(45) Date of publication and mention of the grant of the patent: **04.03.2026**
(21) Application number: 20839978.2
(22) Date of filing: 08.07.2020
(51) Int. Cl.: A23L 29/269, A23L 29/294

(54) **COMPOSITION FOR IMPARTING THICKNESS**
ZUSAMMENSETZUNG ZUR VERLEIHUNG VON DICKE
COMPOSITION POUR CONFÉRER DE L'ÉPAISSEUR

(30) Priority: 12.07.2019 JP 2019130294
(43) Date of publication of application: 18.05.2022
(73) Proprietor: Morinaga Milk Industry Co., Ltd., Minato-ku Tokyo 105-7122 (JP)
(72) Inventor: KAWAKAMI, Satomi, Zama-shi, Kanagawa 252-8583 (JP); HAYAKAWA, Yuki, Zama-shi, Kanagawa 252-8583 (JP); KATO, Mana, Zama-shi, Kanagawa 252-8583 (JP)
(74) Representative: Vossius & Partner Patentanwälte Rechtsanwälte mbB
(86) International application number: PCT/JP2020/026715
(87) International publication number: WO 2021/010257

(56) References cited:
- EP-A1- 3 257 378
- WO-A1-2006/095756
- JP-A- 2004 049 225
- JP-A- 2007 124 954
- JP-A- 2011 244 809
- JP-A- 2016 146 780
- JP-A- S6 324 865
- JP-B2- 3 642 482
- US-B2- 10 136 667
- ADACHI NORIFUMI : "Diversifying xanthan gum grades", NEW FOOD INDUSTRY, vol. 43, no. 4, 2001, JP, pages 49 - 55, XP009533398, ISSN: 0547-0277
- WATASE MINEO : "A story of flowing gel (jelly)", SHOKUHIN KOGYO - THE FOOD INDUSTRY, vol. 52, no. 18, 2009, JP, pages 80 - 84, XP009533401
- WATASE MINEO : "The dynamic viscoelasticity of mixed gels of xanthan gum when freezing & thawing and heating & cooling are repeated and adding of various oligosaccharides", THE FOOD INDUSTRY, vol. 44, no. 7, 2001, JP, pages 60 - 72, XP009533399

## Description

### Technical Field

The present technology relates to a thickening composition.

### Background Art

A person with dysphagia sometimes has difficulty in ingesting a liquid, such as water or tea, as it is. Therefore, a liquid is often thickened so that such a person can easily ingest the liquid. Several compositions for thickening a liquid have been proposed thus far. For example, the below-listed PTL 1 discloses a thickening agent composition containing xanthan gum and a water-soluble calcium salt.

### Citation List

### Patent Literature

PTL 1: Japanese Patent Laid-Open Publication No. 2006-271258 Further thickeners comprising xanthan gum are disclosed in JP 2011 244809 A, US 10 136 667 B2, EP 3 257 378 A1, JP 2007 124954 A.

### Summary of Invention

### Technical Problem

It is undesirable if lumps are formed when a thickening composition is mixed into a liquid. The thickness imparted to the liquid is sometimes insufficient when lumps are formed. Further, it is possible that lumps may be perceived as foreign matter when lumps are formed, which may adversely affect swallowing. It is therefore an object of the present technology to provide a novel thickening composition which can thicken a liquid without forming lumps.

### Solution to Problem

The present inventors, through studies of a thickening composition comprising xanthan gum, have found that a particular particle size distribution is suited to prevent the formation of lumps.

Thus, the present technology provides a powdery thickening composition comprising xanthan gum, wherein when particle size measurement is performed on the composition by laser diffraction particle size analysis, the proportion of the number of particles having a particle size of more than 75 µm and not more than 150 µm is not more than 50% of the total number of particles, and the proportion of the number of particles having a particle size of more than 150 µm and not more than 250 µm is not less than 15% of the total number of particles. The content of the xanthan gum is 20% by mass to 40% by mass, and the thickening composition comprises a water-soluble calcium salt.

In the thickening composition, when particle size measurement is performed on the composition by laser diffraction particle size analysis, the proportion of the number of particles having a particle size of not more than 75 µm may be not more than 30% of the total number of particles.

In the thickening composition, when particle size measurement is performed on the composition by laser diffraction particle size analysis, the proportion of the number of particles having a particle size of more than 250 µm and not more than 500 µm may be not more than 20% of the total number of particles.

In the thickening composition, when particle size measurement is performed on the composition by laser diffraction particle size analysis, the proportion of the number of particles having a particle size of not more than 500 µm may be not less than 90% of the total number of particles.

The thickening composition may have a specific surface area of 50 m²/kg to 80 m²/kg.

When 3.0 g of the composition is added to 100 g of deionized water at 20°C in 5 seconds while stirring the water at 3 rps, and then the water is further stirred at 3 rps for 30 seconds, the viscosity of the deionized water immediately after the stirring may be not less than 350 mPa·s.

The content of the water-soluble calcium salt may be 0.5% by mass to 10.0% by mass.

The thickening composition may contain a citric acid salt.

The content of the citric acid salt may be 0.5% by mass to 10.0% by mass.

The thickening composition may contain an excipient, and the content of the excipient may be 50% by mass to 75% by mass.

The thickening composition is produced by granulating a xanthan gum-containing powder using a binder.

The present technology also provides a method for producing a thickening composition, comprising a granulation step of granulating a xanthan gum-containing powder using a binder, wherein the granulation in the granulation step is performed in such a manner that when particle size measurement is performed on the resulting composition by laser diffraction particle size analysis, the proportion of the number of particles having a particle size of more than 75 µm and not more than 150 µm is not more than 50% of the total number of particles, and the proportion of the number of particles having a particle size of more than 150 µm and not more than 250 µm is not less than 15% of the total number of particles.

### Advantageous Effects of Invention

It is possible to thicken a liquid by the composition of the present technology without forming lumps. Furthermore, the thickening composition of the present technology can quickly thicken a liquid.

The effects of the present technology are not limited to the above-described effects; the present technology may achieve any such effect as described herein.

### Brief Description of the Drawings

FIG. 1 shows photographs showing the results of an evaluation of the formation of lumps upon addition of a thickening composition to a liquid.
FIG. 2 is a graph showing the results of measurement of the viscosity of deionized water upon addition of a thickening composition to the deionized water.
FIG. 3 is a graph showing the results of measurement of the viscosity of tea upon addition of a thickening composition to the tea.

### Description of Embodiments

Preferred embodiments of the present technology will now be described. It is to be understood that the present technology is not limited to the below-described preferred embodiments, and various changes and modifications may be made within the scope of the present technology.

### 1. Thickening Composition of the Present Technology

The thickening composition of the present technology comprises xanthan gum, is in powder form and, when particle size measurement is performed on the composition by laser diffraction particle size analysis, has a particle size distribution in which the proportion of the number of particles having a particle size of more than 75 µm and not more than 150 µm is not more than 50% of the total number of particles, and the proportion of the number of particles having a particle size of more than 150 µm and not more than 250 µm is not less than 15% of the total number of particles. The content of the xanthan gum is 20% by mass to 40% by mass, and the thickening composition comprises a water-soluble calcium salt.

A thickening composition comprising xanthan gum may form lumps depending on how the thickening composition is mixed with a liquid. For example, lumps may be formed when stirring of the liquid is performed some time after the thickening composition is added to the liquid. The present inventors, through studies of a thickening composition comprising xanthan gum, have found that a particular particle size distribution is especially suited to prevent the formation of lumps.

The present inventors have also found that when a thickening composition comprising xanthan gum has a specific particle size distribution, the composition has an excellent viscosity-developing property.

Details of the thickening composition of the present technology will be described below.

### (1) Composition of the Thickening Composition

The thickening composition of the present technology comprises xanthan gum. Xanthan gum is a polysaccharide comprising constituent units of glucose, mannose, and glucuronic acid. The main chain of xanthan gum is composed of glucose, and the side chains of xanthan gum are composed of mannose and glucuronic acid. The side chains may be bonded to every other glucose residue of the main chain. A terminal mannose residue in the side chains may or may not have pyruvic acid. The mannose residues, bonded to the main chain, may or may not be acetylated.

The xanthan gum may be a polysaccharide produced by Xanthomonas campestris, in particular a polysaccharide secreted by Xanthomonas campestris.

The content of the xanthan gum is not more than 40% by mass, preferably not more than 38% by mass, more preferably not more than 35% by mass, and even more preferably not more than 33% by mass.

The content of the xanthan gum is not less than 20% by mass, preferably not less than 22% by mass, more preferably not less than 25% by mass, and particularly preferably not less than 27% by mass.

The upper limit and the lower limit of the content of the xanthan gum may each be selected from the above values; the content is, for example, 20% by mass to 40% by mass, preferably 22% by mass to 38% by mass, and more preferably 25% by mass to 35% by mass.

When the content of the xanthan gum is too high, lumps may be more likely to be formed. When the content of the xanthan gum is too low, the thickening agent needs to be used in a larger amount to thicken a liquid, which may be less efficient.

The content of the xanthan gum refers to the proportion of the mass of the xanthan gum to the total mass of the components, other than water for use as a binder, of the thickening composition of the present technology. Thus, the content of the xanthan gum has substantially the same meaning as the proportion of the xanthan gum, used as a raw material, to 100 parts by mass of the thickening composition of the present technology. The same applies also to the contents of the components other than xanthan gum (e.g., a water-soluble calcium salt, a citric acid salt, and an excipient). Thus, the content of each component in the thickening composition of the present technology refers to the proportion of the mass of the component to the total mass of the components other than water for use as a binder.

The thickening composition of the present technology also contains a water-soluble calcium salt. The water-soluble calcium salt is, for example, calcium lactate or calcium chloride, preferably calcium lactate. The calcium salt may be a hydrate, preferably calcium lactate pentahydrate.

The content of the water-soluble calcium salt (in particular calcium lactate) may preferably be not less than 0.5% by mass, more preferably not less than 1.0% by mass, even more preferably not less than 1.5% by mass, and particularly preferably not less than 2.0% by mass.

The content of the water-soluble calcium salt (in particular calcium lactate) may be, for example, not more than 10.0% by mass, preferably not more than 8.0% by mass, more preferably not more than 6.0% by mass, even more preferably not more than 5.0% by mass, and particularly preferably not more than 4.0% by mass, not more than 3.5% by mass, or not more than 3.0% by mass.

The upper limit and the lower limit of the content of the water-soluble calcium salt may each be selected from the above values; the content is, for example, 0.5% by mass to 10.0% by mass, preferably 1.0% by mass to 6.0% by mass, more preferably 1.5% by mass to 4.0% by mass, and even more preferably 2.0% by mass to 3.0% by mass.

The above numerical range of the content of the water-soluble calcium salt is suited to prevent the formation of lumps and to efficiently develop viscosity.

The thickening composition of the present technology may also contain a citric acid salt. The citric acid salt is preferably an alkali metal salt of citric acid, more preferably a sodium or potassium salt of citric acid, or a mixture of a sodium salt of citric acid and a potassium salt of citric acid, and even more preferably a sodium salt of citric acid. The sodium salt of citric acid is more preferably trisodium citrate such as trisodium citrate dihydrate.

The content of the citric acid salt may preferably be not less than 0.5% by mass, more preferably not less than 1.0% by mass, even more preferably not less than 1.5% by mass, and particularly preferably not less than 2.0% by mass.

The content of the citric acid salt may be, for example, not more than 10.0% by mass, preferably not more than 8.0% by mass, more preferably not more than 6.0% by mass, even more preferably not more than 5.0% by mass, and particularly preferably not more than 4.0% by mass, not more than 3.5% by mass, or not more than 3.0% by mass.

The upper limit and the lower limit of the content of the citric acid salt may each be selected from the above values; the content is, for example, 0.5% by mass to 10.0% by mass, preferably 1.0% by mass to 6.0% by mass, more preferably 1.5% by mass to 4.0% by mass, and even more preferably 2.0% by mass to 3.0% by mass.

The above numerical range of the content of the citric acid salt is suited to prevent the formation of lumps and to efficiently develop viscosity.

The thickening composition of the present technology may also contain an excipient. The excipient may be, for example, one or a combination of two or more selected from the group comprising dextrin, starch, and sugar.

Examples of the dextrin include dextrin, amylodextrin, erythrodextrin, achrodextrin, maltodextrin, and cyclodextrin.

Examples of the starch include raw starches such as starch derived from corn, starch derived from waxy corn, starch derived from potato, starch derived from sweet potato, starch derived from wheat, starch derived from rice, starch derived from glutinous rice, starch derived from tapioca, and starch derived from sago palm; and modified starches obtained by subjecting one of the raw starches to a physical or chemical treatment. Examples of the modified starches include acid-degraded starch, oxidized starch, gelatinized starch, grafted starch, etherified starch into which a carboxymethyl group or a hydroxyalkyl group, for example, has been introduced, esterified starch into which an acetyl group, for example, has been introduced, crosslinked starch in which a polyfunctional group is bound to at least two hydroxy groups of the starch, emulsifiable starch into which a hydrophobic group, such as an octenyl succinate group, has been introduced, and wet-heated or dry-heated starch.

Examples of the sugar include sucrose, fructose, glucose, maltose, a saccharified product from starch, reduced starch syrup, and trehalose.

One or a combination of two or more of the above-listed materials may be used as the excipient.

According to a preferred embodiment of the present technology, the excipient is dextrin. Using dextrin as the excipient contributes to enhancement of dispersibility and/or solubility of the thickening composition of the present technology in a liquid. The dextrose equivalent (DE) of dextrin for use in the present technology is preferably 5 to 20, more preferably 10 to 15. Dextrin having a DE in such a numerical range contributes to enhancement of dispersibility and/or solubility of the thickening composition of the present technology in a liquid.

The content of the excipient (in particular dextrin) is preferably not less than 50% by mass, more preferably not less than 55% by mass, even more preferably not less than 60% by mass, and particularly preferably not less than 62% by mass.

The content of the excipient (in particular dextrin) is preferably not more than 75% by mass, more preferably not more than 73% by mass, even more preferably not more than 70% by mass, and particularly preferably not more than 68% by mass.

The upper limit and the lower limit of the content of the excipient may each be selected from the above values; the content is, for example, 50% by mass to 75% by mass, preferably 55% by mass to 75% by mass, and more preferably 60% by mass to 70% by mass.

The content in the above numerical range contributes to enhancement of dispersibility and/or solubility of the thickening composition of the present technology in a liquid.

According to a preferred embodiment of the present technology, the thickening composition of the present technology comprises xanthan gum, a water-soluble calcium salt, and a citric acid salt. Particularly preferably, the water-soluble calcium salt is calcium lactate, and the citric acid salt is a sodium salt of citric acid. The inclusion of the three components is suited to prevent the formation of lumps, and to develop viscosity. In addition, adopting the below-described particle size distribution in the thickening composition comprising the three components is particularly preferred for the prevention of the formation of lumps and for the development of viscosity.

The total content of the three components may preferably be 25% by mass to 45% by mass, more preferably 30% by mass to 40% by mass, and even more preferably 32% by mass to 38% by mass. In this embodiment, the thickening composition of the present technology may comprise dextrin as an excipient. The content of dextrin is preferably 55% by mass to 75% by mass, more preferably 60% by mass to 70% by mass, and even more preferably 62% by mass to 68% by mass.

For example, the total content of xanthan gum, calcium lactate, a sodium salt of citric acid, and an excipient (in particular dextrin) in the thickening composition of the present technology may be not less than 90% by mass, preferably not less than 95% by mass, and more preferably not less than 98% by mass.

### (2) Properties and Form of the Thickening Composition

The thickening composition of the present technology is in powder form and, when particle size measurement is performed on the composition by laser diffraction particle size analysis, has a particle size distribution in which the proportion of the number of particles having a particle size of more than 75 µm and not more than 150 µm is not more than 50% of the total number of particles, and the proportion of the number of particles having a particle size of more than 150 µm and not more than 250 µm is not less than 15% of the total number of particles. Such a particle size distribution makes it possible to more securely prevent the formation of lumps when the composition is added to and mixed with a liquid. It is possible to thicken a liquid, without forming lumps, even when the liquid is stirred some time after the composition is added to the liquid.

As used herein, the term "lump" may mean an aggregate of powder which aggregates, when the power is added to a liquid, without dissolving or dispersing in the liquid, in particular an agglomerate having a size visible to the naked eye.

The particle size distribution is herein measured by laser diffraction particle size analysis which is an injection-type dry measurement method according to JIS Z 8825-1. A commercially-available laser diffraction particle size analyzer, e.g., Mastersizer 3000 (Malvern Panalytical Ltd.), may be used as an apparatus for performing the measurement.

The proportion of the number of particles having a particle size of more than 75 µm and not more than 150 µm is not more than 50% as described above, and is preferably not more than 49%, more preferably not more than 48% of the total number of particles constituting the thickening composition of the present technology.

The proportion of the number of particles having a particle size of more than 75 µm and not more than 150 µm is, for example, not less than 25%, preferably not less than 30%, more preferably not less than 35%, and particularly preferably not less than 37% of the total number of particles constituting the thickening composition of the present technology.

Owing to the proportion of the number of particles, having a particle size of more than 75 µm and not more than 150 µm, being within the above numerical range, the formation of lumps can be more securely prevented.

According to a preferred embodiment of the present technology, the proportion of the number of particles having a particle size of more than 75 µm and not more than 150 µm is preferably not less than 35%, more preferably not less than 37% of the total number of particles constituting the thickening composition. Owing to the proportion of the number of particles, having a particle size of more than 75 µm and not more than 150 µm, being not less than such a lower limit value, the thickening composition of the present technology can not only prevent the formation of lumps, but can also impart a higher viscosity to a liquid.

In this embodiment, the proportion of the number of particles having a particle size of more than 75 µm and not more than 150 µm is, for example, 35% to 50%, preferably 37% to 50% of the total number of particles constituting the thickening composition.

The proportion of the number of particles having a particle size of more than 150 µm and not more than 250 µm is not less than 15% as described above, and is preferably not less than 18%, more preferably not less than 20% of the total number of particles constituting the thickening composition of the present technology.

The proportion of the number of particles having a particle size of more than 150 µm and not more than 250 µm is, for example, not more than 40%, preferably not more than 35%, and more preferably not more than 30% of the total number of particles constituting the thickening composition of the present technology.

Owing to the proportion of the number of particles, having a particle size of more than 150 µm and not more than 250 µm, being within the above numerical range, the formation of lumps can be more securely prevented.

The proportion of the number of particles having a particle size of more than 250 µm and not more than 500 µm is preferably not more than 20%, more preferably not more than 15%, and even more preferably not more than 10% of the total number of particles constituting the thickening composition of the present technology.

The proportion of the number of particles having a particle size of more than 250 µm and not more than 500 µm is, for example, not less than 1%, preferably not less than 2%, and more preferably not less than 3% of the total number of particles constituting the thickening composition of the present technology.

Owing to the proportion of the number of particles, having a particle size of more than 250 µm and not more than 500 µm, being within the above numerical range, the formation of lumps can be more securely prevented. In addition, such a particle size distribution contributes to imparting a higher viscosity to a liquid.

The proportion of the number of particles having a particle size of not more than 75 µm is preferably not more than 30%, more preferably not more than 27%, and even more preferably not more than 25% of the total number of particles constituting the thickening composition of the present technology.

The proportion of the number of particles having a particle size of not more than 75 µm is, for example, not less than 5%, preferably not less than 10%, and more preferably not less than 12% of the total number of particles constituting the thickening composition of the present technology.

Owing to the proportion of the number of particles, having a particle size of not more than 75 µm, being within the above numerical range, the formation of lumps can be more securely prevented.

In a particularly preferred embodiment, the proportion of the number of particles having a particle size of not more than 75 µm is preferably not less than 15%, more preferably not less than 16%, and even more preferably not less than 17% of the total number of particles constituting the thickening composition of the present technology.

Owing to the proportion of the number of particles, having a particle size of not more than 75 µm, being within the above numerical range, the formation of lumps can be more securely prevented and, in addition, a higher viscosity can be imparted to a liquid.

The proportion of the number of particles having a particle size of not more than 500 µm is preferably not less than 90%, more preferably not less than 93%, and even more preferably not less than 95% of the total number of particles constituting the thickening composition of the present technology.

Owing to the proportion of the number of particles, having a particle size of not more than 500 µm, being within the above numerical range, the formation of lumps can be more securely prevented.

The specific surface area of the thickening composition of the present technology may be 50 m²/kg to 80 m²/kg, preferably 60 m²/kg to 80 m²/kg, and more preferably 60 m²/kg to 75 m²/kg. The specific surface area within the above numerical range may contribute to prevention of the formation of lumps.

Particularly preferably, the specific surface area of the thickening composition of the present technology is 60 m²/kg to 80 m²/kg, more preferably 60 m²/kg to 75 m²/kg. The specific surface area within the above numerical range is suited to impart a higher viscosity to a liquid.

The specific surface area can be measured simultaneously with the measurement of particle size distribution using Mastersizer 3000 (Malvern Panalytical Ltd.), described below in the working examples.

As used herein, the term "thickness" may mean the state of a liquid having a certain level of viscosity, e.g. a higher viscosity than water. The viscosity may be as described above.

As used herein, the term "thickening composition" may refer to a composition to be used for increasing the viscosity of a liquid. Thus, "thickening composition" can also be termed viscosity-increasing agent or viscosity-increasing composition.

The thickening composition of the present technology has such a thickening property that when 3.0 g of the composition is added to 100 g of deionized water at 20°C in 5 seconds while stirring the water at 3 rps, and then the water is further stirred at 3 rps for 30 seconds, the viscosity of the deionized water immediately after the stirring is preferably not less than 350 mPa·s, more preferably not less than 360 mPa·s, and even more preferably not less than 370 mPa·s. The thickening property enables the thickening composition of the present technology to more efficiently thicken a liquid.

### (3) Method for Producing the Thickening Composition

The thickening composition of the present technology can be produced by mixing and granulating the components of the composition. A method for producing the thickening composition of the present technology comprises, for example, a granulation step of granulating a xanthan gum-containing powder using a binder. The granulation in the granulation step can be performed in such a manner that when particle size measurement is performed on the resulting composition by laser diffraction particle size analysis, the proportion of the number of particles having a particle size of more than 75 µm and not more than 150 µm is not more than 50% of the total number of particles, and the proportion of the number of particles having a particle size of more than 150 µm and not more than 250 µm is not less than 15% of the total number of particles.

The xanthan gum-containing powder may be, for example, a powdery mixture obtained by mixing xanthan gum, a water-soluble calcium salt (in particular calcium lactate), a citric acid salt, and an excipient. Thus, the production method may comprise a mixing step of mixing xanthan gum, a water-soluble calcium salt (in particular calcium lactate), a citric acid salt, and an excipient to obtain a powdery mixture.

Thus, in one embodiment of the present technology, the production method may comprise a mixing step of mixing xanthan gum, a water-soluble calcium salt (in particular calcium lactate), a citric acid salt, and an excipient to obtain a powdery mixture, and a granulation step of granulating the powdery mixture using a binder to obtain a composition. The composition may be the thickening composition of the present technology.

The xanthan gum, the water-soluble calcium salt, the citric acid salt and the excipient, used in the mixing step, are each preferably in powder form. Thus, powdery xanthan gum, a powdery water-soluble calcium salt, a powdery citric acid salt and a powdery excipient may be mixed in the mixing step. Details of these components may be as described above under the heading "(1) Composition of the Thickening Composition".

The mixing proportions of the components in the mixing step may be set such that the composition described above under the heading "(1) Composition of the Thickening Composition" is obtained. For example, the contents of the components described above under the heading "(1) Composition of the Thickening Composition" may be employed as the mixing proportions of the components in the mixing step.

For example, the mixing proportion of the xanthan gum may be, for example, not more than 40% by mass, preferably not more than 38% by mass, more preferably not more than 35% by mass, and even more preferably not more than 33% by mass, as described above under the heading "(1) Composition of the Thickening Composition". The content of the xanthan gum may be, for example, not less than 20% by mass, preferably not less than 22% by mass, more preferably not less than 25% by mass, and particularly preferably not less than 27% by mass. The mixing proportion of the xanthan gum refers to the proportion of the mass of the xanthan gum to the total mass of the components, other than water for use as a binder, of the thickening composition of the present technology. The same applies also to the mixing proportions of the components other than xanthan gum (e.g., a water-soluble calcium salt, a citric acid salt, and an excipient).

The mixing proportion of the water-soluble calcium salt (in particular calcium lactate) may preferably be not less than 0.5% by mass, more preferably not less than 1.0% by mass, even more preferably not less than 1.5% by mass, and particularly preferably not less than 2.0% by mass. The mixing proportion of the water-soluble calcium salt (in particular calcium lactate) may be, for example, not more than 10.0% by mass, preferably not more than 8.0% by mass, more preferably not more than 6.0% by mass, even more preferably not more than 5.0% by mass, and particularly preferably not more than 4.0% by mass, not more than 3.5% by mass, or not more than 3.0% by mass.

The mixing proportion of the citric acid salt may preferably be not less than 0.5% by mass, more preferably not less than 1.0% by mass, even more preferably not less than 1.5% by mass, and particularly preferably not less than 2.0% by mass. The mixing proportion of the citric acid salt may be, for example, not more than 10.0% by mass, preferably not more than 8.0% by mass, more preferably not more than 6.0% by mass, even more preferably not more than 5.0% by mass, and particularly preferably not more than 4.0% by mass, not more than 3.5% by mass, or not more than 3.0% by mass.

The mixing proportion of the excipient (in particular dextrin) is preferably not less than 50% by mass, more preferably not less than 55% by mass, even more preferably not less than 60% by mass, and particularly preferably not less than 62% by mass. The mixing proportion of the excipient (in particular dextrin) is preferably not more than 75% by mass, more preferably not more than 73% by mass, even more preferably not more than 70% by mass, and particularly preferably not more than 68% by mass.

According to a preferred embodiment of the present technology, in the mixing step, the sum of the mixing proportions of xanthan gum, the water-soluble calcium salt and the citric acid salt may preferably be 25% by mass to 45% by mass, more preferably 30% by mass to 40% by mass, and even more preferably 32% by mass to 38% by mass. In this embodiment, dextrin may be used as an excipient in the mixing step. The mixing proportion of dextrin is preferably 55% by mass to 75% by mass, more preferably 60% by mass to 70% by mass, and even more preferably 62% by mass to 68% by mass.

In a particularly preferred embodiment of the present technology, in the mixing step, the sum of the mixing proportions of xanthan gum, calcium lactate, a sodium salt of citric acid, and an excipient (in particular dextrin) may be not less than 90% by mass, preferably not less than 95% by mass, and more preferably not less than 98% by mass.

The thickening composition of the present technology having the above-described particle size distribution can be obtained by adjusting granulating conditions in the granulation step. Alternatively, the thickening composition after the granulation step may be subjected to screening using a sieve so that the composition will have the above-described particle size distribution.

The binder used in the granulation step may be, for example, water.

The granulation in the granulation step may be performed, for example, in such a manner that when particle size measurement is performed on the resulting composition by laser diffraction particle size analysis, the proportion of the number of particles having a particle size of more than 75 µm and not more than 150 µm is not more than 50% of the total number of particles, and the proportion of the number of particles having a particle size of more than 150 µm and not more than 250 µm is not less than 15% of the total number of particles.

The granulation in the granulation step may be performed in such a manner that when particle size measurement is performed on the resulting composition by laser diffraction particle size analysis, the proportion of the number of particles having a particle size of more than 75 µm and not more than 150 µm is not more than 50%, preferably not more than 49%, and more preferably not more than 48% of the total number of particles.

The granulation in the granulation step may be performed in such a manner that the proportion of the number of particles having a particle size of more than 75 µm and not more than 150 µm is, for example, not less than 25%, preferably not less than 30%, more preferably not less than 35%, and particularly preferably not less than 37%.

According to a preferred embodiment of the present technology, the granulation in the granulation step may be performed in such a manner that the proportion of the number of particles having a particle size of more than 75 µm and not more than 150 µm is preferably not less than 35%, more preferably not less than 37%.

In this embodiment, the granulation may be performed in such a manner that the proportion of the number of particles having a particle size of more than 75 µm and not more than 150 µm is, for example, 35% to 50%, preferably 37% to 50%.

The granulation in the granulation step may be performed in such a manner that the proportion of the number of particles having a particle size of more than 150 µm and not more than 250 µm is not less than 15%, preferably not less than 18%, and more preferably not less than 20% of the total number of particles.

The granulation in the granulation step may be performed in such a manner that the proportion of the number of particles having a particle size of more than 150 µm and not more than 250 µm is, for example, not more than 40%, preferably not more than 35%, and more preferably not more than 30%.

The granulation in the granulation step may be performed in such a manner that the proportion of the number of particles having a particle size of more than 250 µm and not more than 500 µm is preferably not more than 20%, more preferably not more than 15%, and even more preferably not more than 10% of the total number of particles.

The granulation in the granulation step may be performed in such a manner that the proportion of the number of particles having a particle size of more than 250 µm and not more than 500 µm is, for example, not less than 1%, preferably not less than 2%, and more preferably not less than 3%.

The granulation in the granulation step may be performed in such a manner that the proportion of the number of particles having a particle size of not more than 75 µm is preferably not more than 30%, more preferably not more than 27%, and even more preferably not more than 25% of the total number of particles.

The granulation in the granulation step may be performed in such a manner that the proportion of the number of particles having a particle size of not more than 75 µm is, for example, not less than 5%, preferably not less than 10%, and more preferably not less than 12%.

The granulation in the granulation step may be performed in such a manner that the proportion of the number of particles having a particle size of not more than 75 µm is preferably not less than 15%, more preferably not less than 16%, and even more preferably not less than 17% of the total number of particles.

The granulation in the granulation step may be performed in such a manner that the proportion of the number of particles having a particle size of not more than 500 µm is preferably not less than 90%, more preferably not less than 93%, and even more preferably not less than 95% of the total number of particles.

The mixing step and the granulation step may be performed by using a commercially-available granulation apparatus such as a fluidized-bed granulation apparatus.

### (4) Usage of the thickening composition

The thickening composition of the present technology is used to thicken a liquid. The liquid is preferably a liquid containing water, more preferably a water-based liquid.

The liquid is preferably a liquid food. The liquid food may be, for example, a liquid containing tea components, a liquid containing a protein and/or a fat, a liquid containing an acid component, a salt-containing liquid, or a mineral-containing liquid. The following are specific examples of the liquid food:
water;
lactic beverages such as milk, processed milk, a milk beverage, a lactic acid bacteria beverage, and drinking yogurt;
soft drinks such as a soft drink containing fruit juice or vegetable juice, a sports drink, a drink containing functional components, an ionic drink, and a vitamin-containing drink;
fruit juices such as orange juice;
vegetable juices such as tomato juice and carrot juice;
tea beverages such as a green tea beverage, a red tea beverage, a barley tea beverage, a brown rice tea beverage, a powdered green tea beverage, and a roasted green tea beverage;
a coffee beverage;
a chocolate beverage;
nutraceutical drinks such as a vitamin supplement drink;
alcohols such as fruit wine (including wine), rice wine, and whisky;
soups such as miso soup, clean soup, consommé soup, potage soup, cream soup, and Chinese soup;
liquid foods such as stew, curry, and gratin;
special foods or therapeutic foods, such as a protein/phosphor/potassium-adjusted food, a salt-adjusted food, a oil/fat-adjusted food, an intestinal regulating food, a calcium/iron/vitamin-enriched food, a low-allergy food, a concentrated liquid food, a pasty food, and a minced food; and
liquid seasonings such as soy source and source.

The thickening composition of the present technology may be used to thicken any of the exemplary liquid foods.

Thus, the present technology also provides a food composition containing the thickening composition of the present technology. The food composition may have a viscosity of, for example, 10 mPa·s to 1000 mPa·s, particularly 100 mPa·s to 800 mPa·s, more particularly 200 mPa·s to 600 mPa·s, and even more particularly 300 mPa·s to 500 mPa·s. While the food composition having such a viscosity may be for persons with dysphagia, it may also be ingested by people without dysphagia.

The thickening composition of the present technology may be used to thicken a liquid (in particular one of the above-listed liquid foods) to a viscosity of 10 mPa·s to 1000 mPa·s. For example, the present thickening composition may be used to thicken a liquid (in particular one of the above-listed liquid foods), having a viscosity of less than 10 mPa·s, to a viscosity of 10 mPa·s to 1000 mPa·s, or 100 mPa·s to 800 mPa·s, or 200 mPa·s to 600 mPa·s, or 300 mPa·s to 500 mPa·s.

As described above, the viscosity of a liquid after thickening by the thickening composition of the present technology may be 10 mPa·s to 1000 mPa·s, or 100 mPa·s to 800 mPa·s or, for example, 200 mPa·s to 600 mPa·s. The viscosity may be appropriately set depending on the oral function of a target (person) who is to ingest the liquid.

The viscosity of a liquid is herein measured using an E-type rotating viscometer (product number: MCR 302, manufacturer: Anton Paar) under the following conditions:
Shear rate: 50 sec⁻¹
Cone angle: 1°
Cone radius: 50 mm
Gap: 100 µm

To thicken a liquid with the thickening composition of the present technology, the composition is added to and mixed with the liquid (in particular one of the above-listed liquid foods). For example, to thicken the liquid, the composition may be added preferably in an amount of 0.1 g to 15 g, more preferably 0.3 g to 13 g, and even more preferably 0.5 g to 10 g per 150 g of the liquid.

The temperature of a liquid to be thickened by the thickening composition of the present technology may preferably be 0°C to 60°C, more preferably 3°C to 55°C, and even more preferably 5°C to 50°C. Since the thickening composition of the present technology has excellent solubility and/or dispersibility, it can thicken a liquid without forming lumps over such a wide range of temperatures.

The following examples illustrate the present technology in greater detail and are not intended to limit the scope of the present technology.

### Examples

### 1. Production of a Thickening Composition

30 parts by mass of xanthan gum (manufactured by San-Ei Gen F.F.I., Inc.), 2.6 parts by mass of calcium lactate pentahydrate (manufactured by Daiichi Kasei Co., Ltd.), 2.4 parts by mass of trisodium citrate dihydrate, and 65 parts by mass of dextrin (manufactured by Toa Kasei Co., Ltd.) were granulated using a fluidized-bed granulation apparatus to obtain a granulated product. The granulated product was screened with three sieves (JIS standard sieves): 60 M (mesh) (opening size 250 µm); 100 M (opening size 150 µm); and 200 M (opening size 75 µm). By the screening were obtained a powdery composition that passed through 100 M and stayed on 200 M (hereinafter referred to as "the composition of Experimental Example 1"), a powdery composition that passed through 60 M and stayed on 100 M (hereinafter referred to as "the composition of Experimental Example 2"), and a powdery composition that stayed on 60 M (hereinafter referred to as "the composition of Experimental Example 3").

For each of the compositions of Experimental Examples 1 to 3, measurement of the particle size distribution was performed by laser diffraction particle size analysis using a laser diffraction particle size analyzer (Mastersizer 3000, Malvern Panalytical Ltd.). The measurement conditions were as follows:
Non-spherical particle mode: selected "Yes"
Fraunhofer type: selected "No"
Dispersion medium: "dry dispersion"
Lower limit of scattering intensity: 1.00%
Upper limit of scattering intensity: 10.00%
Dispersion unit: Aero S (dry dispersion unit)
Feed rate: 41
Air pressure: 3.5 bar
Type of venturi: standard venturi
Type of tray: general-purpose tray
Hopper gap: 2.00 mm
Cleaning sequence: intense
Analysis model: general
Single measurement result mode: selected "No"
Number of off detectors: 0
Dry fine powder mode: selected "No"

The results of the measurement of particle size distribution are shown in Table 1 below.

**Table 1: Particle Size Distribution**

| | Proportion of the number of particles (unit: %) | | | | |
|---|---|---|---|---|---|
| | under 75 µm | 75-150 µm | 150-250 µm | 250-500 µm | over 500 µm |
| Composition of Exp. Example 1 (passed 100M and stayed on 200M) | 34.58 | 54.15 | 11.1 | 0.16 | 0 |
| Composition of Exp. Example 2 (passed 60M and stayed on 100M) | 19.8 | 46.57 | 28.1 | 5.55 | 0 |
| Composition of Exp. Example 3 (stayed on 60M) | 14.38 | 29.89 | 29.66 | 23.57 | 2.51 |

Upon the measurement of particle size distribution, the specific surface area of each of the compositions of the Experimental Examples was also measured. The results of the measurement of specific surface area are shown in Table 2 below.

**Table 2: Specific Surface Area**

| | Specific surface area (unit: m²/kg) |
|---|---|
| Composition of Exp. Example 1 (passed 100M and stayed on 200M) | 87.36 |
| Composition of Exp. Example 2 (passed 60M and stayed on 100M) | 67.01 |
| Composition of Exp. Example 3 (stayed on 60M) | 54.28 |

### 2. Evaluation of the Thickening Compositions

### (1) Evaluation of the formation of lumps

3.0 g of the composition of Experimental Example 1 was added at a time to 100 g of deionized water whose temperature was controlled at 20°C, and the water was stirred at 3 rps for 10 seconds from immediately after the addition of the composition, and then allowed to stand for 20 seconds. The same operation was performed also on the compositions of Experimental Examples 2 and 3.

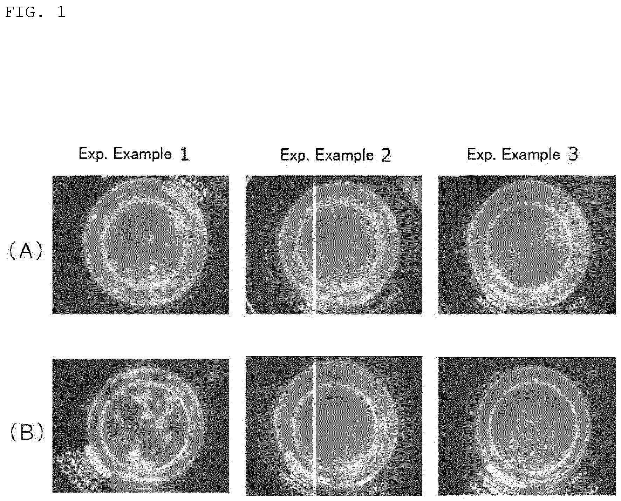

FIG. 1(A) shows the states of the solutions after standing. As shown in FIG. 1(A), a large number of small-sized lumps were observed in the aqueous solution of the composition of Experimental Example 1. On the other hand, no lump was observed in the aqueous solution of the composition of Experimental Example 2 and in the aqueous solution of the composition of Experimental Example 3.

Separately, 3.0 g of the composition of Experimental Example 1 was added at a time to 100 g of deionized water whose temperature was controlled at 20°C, and the water was allowed to stand for 3 seconds. After standing, the water was stirred at 3 rps for 30 seconds. The same operation was performed also on the compositions of Experimental Examples 2 and 3.

FIG. 1(B) shows the states of the solutions after the stirring. As shown in FIG. 1(B), a large number of large-sized lumps were observed in the aqueous solution of the composition of Experimental Example 1. On the other hand, no lump was observed in the aqueous solution of the composition of Experimental Example 2 and in the aqueous solution of the composition of Experimental Example 3.

The compositions of Experimental Examples 2 and 3, when dissolved in water, are thus less likely to form lumps than the composition of Experimental Example 1. The compositions of Experimental Examples 1 to 3 each have the particle size distribution shown in Table 1. The experimental results thus indicate that the formation of lumps upon dissolution of a composition comprising xanthan gum in a liquid can be prevented when the composition has a particle size distribution in which the proportion of the number of particles having a particle size of more than 75 µm and not more than 150 µm is not more than 50% of the total number of particles, and the proportion of the number of particles having a particle size of more than 150 µm and not more than 250 µm is not less than 15% of the total number of particles.

### (2) Evaluation of the development of viscosity

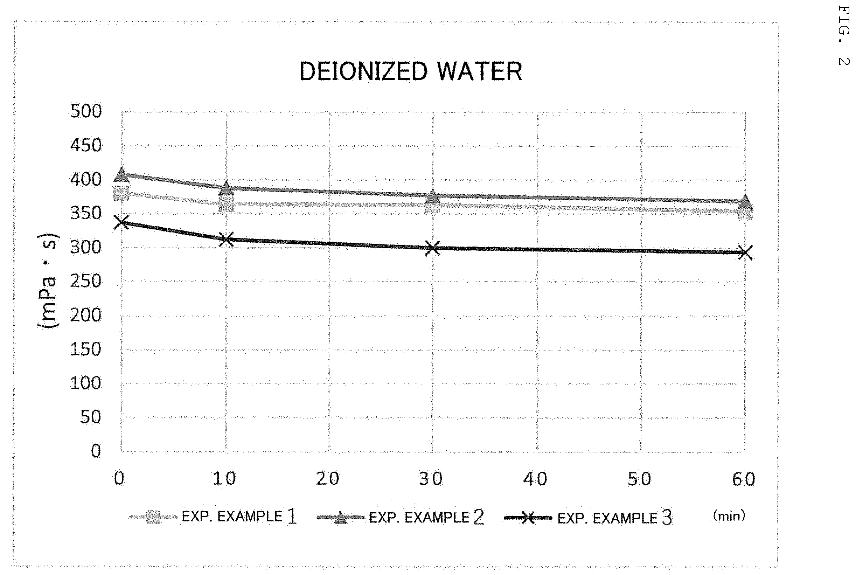

3.0 g of the composition of Experimental Example 1 was added to 100 g of deionized water, whose temperature was controlled at 20°C, in 5 seconds while stirring the water at 3 rps, and thereafter the water was further stirred at 3 rps for 30 seconds. During 60 minutes after the stirring, the viscosity of the solution was measured a plurality of times. The same operation was performed also on the compositions of Experimental Examples 2 and 3. The measurement of viscosity was performed using an E-type rotating viscometer (MCR 302, Anton Paar). In each measurement, a value was read 2 minutes after the start of measurement performed at a shear rate of 50 sec⁻¹. The results of the measurement of viscosity are shown in Table 3 below and in FIG. 2.

**Table 3: Viscosity (unit: mPa·s, solvent: deionized water)**

| | 0 min. | 10 min. | 30 min. | 60 min. |
|---|---|---|---|---|
| Exp. Example 1 | 380 | 364 | 363 | 354 |
| Exp. Example 2 | 408 | 388 | 377 | 369 |
| Exp. Example 3 | 337 | 312 | 300 | 294 |

As shown in Table 3 and FIG. 2, when the composition of Experimental Example 1 or the composition of Experimental Example 2 was used, a higher viscosity was imparted to the water than when the composition of Experimental Example 3 was used. The composition of Experimental Example 2 imparted the highest viscosity to the water.

When the composition of Experimental Example 1 or the composition of Experimental Example 2 was used, the viscosity of the water was not less than 350 mPa·s immediately after the 30-second stirring. On the other hand, when the composition of Experimental Example 3 was used, the viscosity of the water was less than 350 mPa·s immediately after the 30-second stirring.

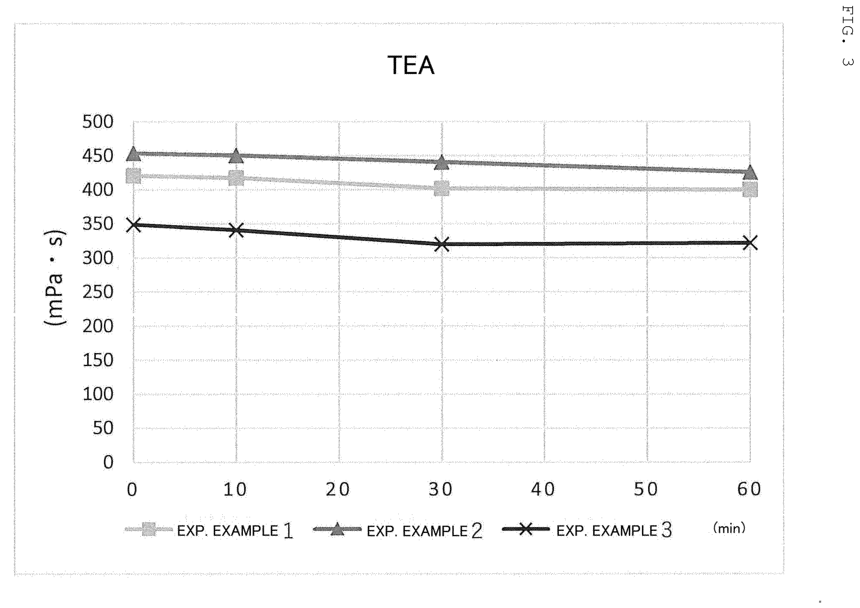

Separately, 3.0 g of the composition of Experimental Example 1 was added to 100 g of green tea (as a drink), whose temperature was controlled at 20°C, while stirring the tea, and thereafter the tea was further stirred at 3 rps for 30 seconds. During 60 minutes after the stirring, the viscosity of the solution was measured a plurality of times. The same operation was performed also on the compositions of Experimental Examples 2 and 3. The measurement of viscosity was performed in the above-described manner. The results of the measurement of viscosity are shown in Table 4 below and in FIG. 3.

**Table 4: Viscosity (unit: mPa·s, solvent: green tea)**

| | 0 min. | 10 min. | 30 min. | 60 min. |
|---|---|---|---|---|
| Exp. Example 1 | 421 | 418 | 402 | 400 |
| Exp. Example 2 | 454 | 451 | 441 | 426 |
| Exp. Example 3 | 349 | 341 | 320 | 322 |

As shown in Table 4 and FIG. 3, when the composition of Experimental Example 1 or the composition of Experimental Example 2 was used, a higher viscosity was imparted to the green tea than when the composition of Experimental Example 3 was used. The composition of Experimental Example 2 imparted the highest viscosity to the green tea.

The compositions of Experimental Examples 1 and 2 can thus impart a higher viscosity to a liquid than the composition of Experimental Examples 3. The compositions of Experimental Examples 1 to 3 each have the particle size distribution shown in Table 1. The experimental results thus indicate that the formation of lumps upon dissolution of a composition comprising xanthan gum in a liquid can be prevented and, in addition, a higher viscosity can be imparted to the liquid when the composition has a particle size distribution in which the proportion of the number of particles having a particle size of more than 75 µm and not more than 150 µm is not less than 35% and not more than 50% of the total number of particles, the proportion of the number of particles having a particle size of more than 150 µm and not more than 250 µm is not less than 15% of the total number of particles, and the proportion of the number of particles having a particle size of more than 250 µm and not more than 500 µm is not more than 20% of the total number of particles.

## Claims

1. A powdery thickening composition comprising xanthan gum, wherein the proportion of the number of particles having a particle size of more than 75 µm and not more than 150 µm, when measured by laser diffraction particle size analysis, is not more than 50% of the total number of particles, and the proportion of the number of particles having a particle size of more than 150 µm and not more than 250 µm, when measured by laser diffraction particle size analysis, is not less than 15% of the total number of particles, wherein the content of the xanthan gum is 20% by mass to 40% by mass, and wherein the thickening composition comprises a water-soluble calcium salt.

2. The thickening composition according to claim 1, wherein the proportion of the number of particles having a particle size of not more than 75 µm, when measured by laser diffraction particle size analysis, is not more than 30% of the total number of particles.

3. The thickening composition according to claim 1 or 2, wherein the proportion of the number of particles having a particle size of more than 250 µm and not more than 500 µm, when measured by laser diffraction particle size analysis, is not more than 20% of the total number of particles.

4. The thickening composition according to any one of claims 1 to 3, wherein the proportion of the number of particles having a particle size of not more than 500 µm, when measured by laser diffraction particle size analysis, is not less than 90% of the total number of particles.

5. The thickening composition according to any one of claims 1 to 4, wherein the thickening composition has a specific surface area of 50 m²/kg to 80 m²/kg.

6. The thickening composition according to any one of claims 1 to 5, wherein when 3.0 g of the composition is added to 100 g of deionized water at 20°C in 5 seconds while stirring the water at 3 rps, and then the water is further stirred at 3 rps for 30 seconds, the viscosity of the deionized water immediately after the stirring is not less than 350 mPa·s.

7. The thickening composition according to any one of claims 1 to 6, wherein the proportion of the number of particles having a particle size of more than 75 µm and not more than 150 µm, when measured by laser diffraction particle size analysis, is not less than 25% and not more than 50% of the total number of particles, and the proportion of the number of particles having a particle size of more than 150 µm and not more than 250 µm, when measured by laser diffraction particle size analysis, is not less than 15% and not more than 40% of the total number of particles.

8. The thickening composition according to any one of claims 1 to 7, wherein the proportion of the number of particles having a particle size of more than 250 µm and not more than 500 µm, when measured by laser diffraction particle size analysis, is not less than 1% and not more than 20% of the total number of particles.

9. The thickening composition according to claim 8, wherein the content of the water-soluble calcium salt is 0.5% by mass to 10.0% by mass.

10. The thickening composition according to any one of claims 1 to 9, wherein the thickening composition contains a citric acid salt, preferably wherein the content of the citric acid salt is 0.5% by mass to 10.0% by mass.

11. The thickening composition according to any one of claims 1 to 10, wherein the thickening composition contains an excipient, and the content of the excipient is 50% by mass to 75% by mass.

12. The thickening composition according to any one of claims 1 to 11, wherein the thickening composition is produced by granulating a xanthan gum-containing powder using a binder.

13. A method for producing the thickening composition according to any one of claims 1 to 12, comprising a granulation step of granulating a xanthan gum-containing powder using a binder.

14. Use of the thickening composition according to any one of claims 1-12, or the thickening composition produced by the method according to claim 13, to thicken a liquid without forming lumps.

## Patentansprüche

1. Pulverförmige Verdickungszusammensetzung, die Xanthan umfasst, wobei das Verhältnis der Anzahl an Partikeln mit einer Partikelgröße von mehr als 75 µm und nicht mehr als 150 µm, wenn mittels Laserbeugungsanalyse der Partikelgröße gemessen, nicht mehr als 50% der Gesamtanzahl an Partikeln ist, und das Verhältnis der Anzahl an Partikeln mit einer Partikelgröße von mehr als 150 µm und nicht mehr als 250 µm, wenn mittels Laserbeugungsanalyse der Partikelgröße gemessen, nicht mehr als 15% der Gesamtanzahl an Partikeln ist, wobei der Gehalt an Xanthan 20 Gew.-% bis 40 Gew.-% ist, und wobei die Verdickungszusammensetzung wasserlösliches Calciumsalz umfasst.

2. Verdickungszusammensetzung nach Anspruch 1, wobei das Verhältnis der Anzahl an Partikeln mit einer Partikelgröße von nicht mehr als 75 µm, wenn mittels Laserbeugungsanalyse der Partikelgröße gemessen, nicht mehr als 30% der Gesamtanzahl an Partikeln ist.

3. Verdickungszusammensetzung nach Anspruch 1 oder 2, wobei das Verhältnis der Anzahl an Partikeln mit einer Partikelgröße von mehr als 250 µm und nicht mehr als 500 µm, wenn mittels Laserbeugungsanalyse der Partikelgröße gemessen, nicht mehr als 20% der Gesamtanzahl an Partikeln ist.

4. Verdickungszusammensetzung nach einem der Ansprüche 1 bis 3, wobei das Verhältnis der Anzahl an Partikeln mit einer Partikelgröße von nicht mehr als 500 µm, wenn mittels Laserbeugungsanalyse der Partikelgröße gemessen, nicht weniger als 90% der Gesamtanzahl an Partikeln ist.

5. Verdickungszusammensetzung nach einem der Ansprüche 1 bis 4, wobei die Verdickungszusammensetzung eine spezifische Oberfläche von 50 m²/kg bis 80 m²/kg hat.

6. Verdickungszusammensetzung nach einem der Ansprüche 1 bis 5, wobei, wenn 3,0 g der Zusammensetzung zu 100 g deionisiertem Wasser bei 20°C innerhalb von 5 Sekunden unter Rühren des Wassers bei 3 U/s hinzugefügt wird, und dann das Wasser 30 Sekunden lang bei 3 U/s weitergerührt wird, die Viskosität des deionisierten Wassers sofort nach dem Rühren nicht weniger als 350 mPa·s ist.

7. Verdickungszusammensetzung nach einem der Ansprüche 1 bis 6, wobei das Verhältnis der Anzahl an Partikeln mit einer Partikelgröße von mehr als 75 µm und nicht mehr als 150 µm, wenn mittels Laserbeugungsanalyse der Partikelgröße gemessen, nicht weniger als 25% und nicht mehr als 50% der Gesamtanzahl an Partikeln ist, und das Verhältnis der Anzahl an Partikeln mit einer Partikelgröße von mehr als 150 µm und nicht mehr als 250 µm, wenn mittels Laserbeugungsanalyse der Partikelgröße gemessen, nicht weniger als 15% und nicht mehr als 40% der Gesamtanzahl an Partikeln ist.

8. Verdickungszusammensetzung nach einem der Ansprüche 1 bis 7, wobei das Verhältnis der Anzahl an Partikeln mit einer Partikelgröße von mehr als 250 µm und nicht mehr als 500 µm, wenn mittels Laserbeugungsanalyse der Partikelgröße gemessen, nicht weniger als 1% und nicht mehr als 20% der Gesamtanzahl an Partikeln ist.

9. Verdickungszusammensetzung nach Anspruch 8, wobei der Gehalt des wasserlöslichen Calciumsalzes 0,5 Gew.-% bis 10,0 Gew.-% ist.

10. Verdickungszusammensetzung nach einem der Ansprüche 1 bis 9, wobei die Verdickungszusammensetzung ein Zitronensäuresalz enthält, bevorzugt wobei der Gehalt an Zitronensäuresalz 0,5 Gew.-% bis 10,0 Gew.-% ist.

11. Verdickungszusammensetzung nach einem der Ansprüche 1 bis 10, wobei die Verdickungszusammensetzung einen Exzipienten enthält, und der Gehalt des Exzipienten 50 Gew.-% bis 75 Gew.-% ist.

12. Verdickungszusammensetzung nach einem der Ansprüche 1 bis 11, wobei die Verdickungszusammensetzung durch Granulieren eines Xanthan enthaltenden Pulvers unter Verwendung eines Bindemittels hergestellt wird.

13. Verfahren zur Herstellung der Verdickungszusammensetzung nach einem der Ansprüche 1 bis 12, das einen Granulierungsschritt des Granulierens eines Xanthan enthaltenden Pulvers unter Verwendung eines Bindemittels umfasst.

14. Verwendung der Verdickungszusammensetzung nach einem der Ansprüche 1 bis 12 oder der durch das Verfahren nach Anspruch 13 hergestellten Verdickungszusammensetzung zum Verdicken einer Flüssigkeit ohne Klumpenbildung.

## Revendications

1. Composition épaississante en poudre comprenant de la gomme de xanthane, dans laquelle la proportion du nombre de particules présentant une taille de particule de plus de 75 µm et de pas plus de 150 µm, lorsqu'elle est mesurée par analyse de taille de particule par diffraction laser, n'est pas supérieure à 50 % du nombre total de particules, et la proportion du nombre de particules présentant une taille de particule de plus de 150 µm et de pas plus de 250 µm, lorsqu'elle est mesurée par analyse de taille de particule par diffraction laser, n'est pas inférieure à 15 % du nombre total de particules, dans laquelle la teneur de la gomme de xanthane est de 20 % en masse à 40 % en masse, et dans laquelle la composition épaississante comprend un sel de calcium soluble dans l'eau.

2. Composition épaississante selon la revendication 1, dans laquelle la proportion du nombre de particules présentant une taille de particule non supérieure à 75 µm, lorsqu'elle est mesurée par analyse de taille de particule par diffraction laser, n'est pas supérieure à 30 % du nombre total de particules.

3. Composition épaississante selon la revendication 1 ou 2, dans laquelle la proportion du nombre de particules présentant une taille de particule de plus 250 µm et de pas plus de 500 µm, lorsqu'elle est mesurée par analyse de taille de particule par diffraction laser, n'est pas supérieure à 20 % du nombre total de particules.

4. Composition épaississante selon l'une quelconque des revendications 1 à 3, dans laquelle la proportion du nombre de particules présentant une taille de particule de pas plus de 500 µm, lorsqu'elle est mesurée par analyse de taille de particule par diffraction laser, n'est pas inférieure à 90 % du nombre total de particules.

5. Composition épaississante selon l'une quelconque des revendications 1 à 4, dans laquelle la composition épaississante présente une surface spécifique de 50 m²/kg à 80 m²/kg.

6. Composition épaississante selon l'une quelconque des revendications 1 à 5, dans laquelle lorsque 3,0 g de la composition sont ajoutés à 100 g d'eau désionisée à 20°C en 5 secondes tout en agitant l'eau à 3 tr/s, puis l'eau est encore agitée à 3 tr/s pendant 30 secondes, la viscosité de l'eau désionisée immédiatement après l'agitation n'est pas inférieure à 350 mPa·s.

7. Composition épaississante selon l'une quelconque des revendications 1 à 6, dans laquelle la proportion du nombre de particules présentant une taille de particule de plus de 75 µm et de pas plus de 150 µm, lorsqu'elle est mesurée par analyse de taille de particule par diffraction laser, n'est pas inférieure à 25 % et pas supérieure à 50 % du nombre total de particules, et la proportion de particules présentant une taille de particule de plus de 150 µm et de pas plus de 250 µm, lorsqu'elle est mesurée par analyse de taille de particule par diffraction laser, n'est pas inférieure à 15 % et pas supérieure à 40 % du nombre total de particules.

8. Composition épaississante selon l'une quelconque des revendications 1 à 7, dans laquelle la proportion du nombre de particules présentant une taille de particule de plus de 250 µm et de pas plus de 500 µm, lorsqu'elle est mesurée par analyse de taille de particule par diffraction laser, n'est pas inférieure à 1 % et pas supérieure à 20 % du nombre total de particules.

9. Composition épaississante selon la revendication 8, dans laquelle la teneur du sel de calcium soluble dans l'eau est de 0,5 % en masse à 10,0 % en masse.

10. Composition épaississante selon l'une quelconque des revendications 1 à 9, dans laquelle la composition épaississante contient un sel d'acide citrique, de préférence dans laquelle la teneur du sel d'acide citrique est de 0,5 % en masse à 10,0 % en masse.

11. Composition épaississante selon l'une quelconque des revendications 1 à 10, dans laquelle la composition épaississante contient un excipient, et la teneur de l'excipient est de 50 % en masse à 75 % en masse.

12. Composition épaississante selon l'une quelconque des revendications 1 à 11, dans laquelle la composition épaississante est produite en granulant une poudre contenant de la gomme de xanthane en utilisant un liant.

13. Procédé de production de la composition épaississante selon l'une quelconque des revendications 1 à 12, comprenant une étape de granulation consistant à granuler une poudre contenant de la gomme xanthane en utilisant un liant.

14. Utilisation de la composition épaississante selon l'une quelconque des revendications 1 à 12, ou de la composition épaississante produite par l'intermédiaire du procédé selon la revendication 13, pour épaissir un liquide sans former de grumeaux.
